# EUROPEAN PATENT APPLICATION

(11) **EP 4 711 251 A1**
(43) Date of publication of application: **18.03.2026**
(21) Application number: 25194753.7
(22) Date of filing: 08.08.2025
(51) Int. Cl.: B62D 25/12

(54) **HOOD AND VEHICLE**

(30) Priority: 04.09.2024 CN 202411234649
(71) Applicant: Stellantis Auto SAS, 78300 Poissy (FR)
(72) Inventor: WANG, ZI YE, SHANGHAI, 200030 (CN); LI, DONGFANG, SHANGHAI, 200030 (CN); LIU, JIUYANG RICO, SHANGHAI, 200030 (CN); SONG, XIU MIN, SHANGHAI, 200030 (CN); LI, BING, SHANGHAI, 200030 (CN)
(74) Representative: BCIP

(57) **Abstract**

The present disclosure relates to a hood and a vehicle, wherein the hood comprises: a hood body, one end of the hood body forming a mounting base; and a hood trim, at least partially overlapped on and fixed to the mounting base, wherein the hood body has an appearance surface forming a streamlined surface having a synergistic style together with an appearance surface of the hood trim. Through a two-piece design of the hood can reduce the probability of repairing the entire of the hood, and at the same time can make the style of the hood more flexible to meet the requirements of different vehicle design styles.

## Description

### RELATED FIELD

The present disclosure relates to the technical field of vehicle parts, in particular to a hood and a vehicle.

### BACKGROUND

The vehicle hood is an important part of the vehicle body structure, which not only plays a role of air diversion, but also protects components in the front compartment of the vehicle body, to fully prevent impact, corrosion, etc., and also to play an aesthetic role to a certain extent. The hood is generally made of metal materials, the outer panel is a streamlined appearance surface to reduce wind resistance and forms decoration, and the inner panel is in the form of a skeleton to enhance rigidity. When the vehicle encounters a collision, the hood often needs to be repaired as a whole, which requires a high maintenance cost and a long maintenance time.

At the same time, with people's pursuit of vehicle appearance, there is also a more aesthetic requirement for the appearance of the hood, and even a requirement for customization and personalization. While the hood in the prior art is limited by metal materials, the appearance is relatively unvaried, which is difficult to meet the requirements of different design styles.

### SUMMARY

In view of the above issues, the present disclosure provides a hood, which can reduce the probability of repairing the entire of the hood through a two-piece design, and at the same time can make the style of the hood more flexible to meet the requirements of different vehicle design styles.

To this end, a first aspect of the present disclosure provides a hood, comprising: a hood body, one end of which forms a mounting base; and, a hood trim at least partially overlapped on and fixed to the mounting base, wherein the hood body has an appearance surface forms a streamlined surface having a synergistic style together with an appearance surface of the hood trim.

According to the above technical concept, the present disclosure may further include any one or more of the following alternative forms.

According to some alternative forms, the hood trim comprises an outer layer, an inner layer and a middle layer connected together, the outer layer forming the appearance surface of the hood trim, the inner layer being connected to the mounting base.

According to some alternative forms, the middle layer comprises a first sealing lip and a second sealing lip extending outwards between the outer layer and the inner layer respectively at two opposite ends of the hood trim, wherein the first sealing lip is configured to cover the hood body, and the second sealing lip is configured to abut against the hood body.

According to some alternative forms, the middle layer is made of rubber, and/or the outer layer is made of plastic, and/or the inner layer is made of plastic.

According to some alternative forms, the middle layer is connected to the inner layer by being molded on the inner layer.

According to some alternative forms, the outer layer and the inner layer are connected by penetration welding.

According to some alternative forms, the first sealing lip comprises a first section that fits against the inner layer, and a second section that extends and bends from the first section away from the outer layer to cover the hood body.

According to some alternative forms, the first sealing lip further comprises a protrusion extending from a connection point, that connects the first section to the second section, towards the outer layer and abutting against the outer layer.

According to some alternative forms, the hood trim is fixed to the hood body by snapping and/or bolting.

A second aspect of the present disclosure provides a vehicle comprising the hood according to the first aspect of the present disclosure.

Compared with the prior art, the hood according to the present disclosure has various beneficial effects, in particular: through the two-piece design, the hood is divided into the hood body and the hood trim arranged at one end of the hood body, generally at the front end of the hood body, so that when a collision is encountered, the probability of repairing the entire of the hood is reduced; meanwhile, it is possible to make a unique graphic or textual design on the hood trim, and thus make the styling of the hood more flexible and meet the requirements of vehicle design styles.

### BRIEF DESCRIPTION OF THE DRAWINGS

Other features and advantages of the present disclosure will be better understood through the following preferred embodiments described in detail with reference to the accompanying drawings. In the drawings, the same reference numerals indicate the same or similar components.
FIG. 1 is a structural schematic view of a hood according to an embodiment of the present disclosure.
FIG. 2 is an exploded view of the hood.
FIG. 3 is a schematic view of the hood applied to the front end of a vehicle.
FIG. 4 is an exploded view of a hood trim according to an embodiment of the present disclosure.
FIG. 5 is a cross-sectional schematic view taken along the section A-A of FIG. 3.
FIG. 6 is a partial enlarged view of FIG. 5.
FIG. 7 is a cross-sectional schematic view taken along the section B-B of FIG. 3.

Elements in the figures are illustrated for simplicity and clarity and are not necessarily drawn to the exact scale. It should be understood that these drawings are not only intended to explain and illustrate the present disclosure, but also contribute to the definition of the present disclosure if necessary.

### DETAILED DESCRIPTION

The embodiments of the present disclosure will be described below with reference to the drawings and preferred embodiments, and those skilled in the art can readily understand other advantages and effects of the present disclosure from the content disclosed in the specification. The present disclosure may also be implemented or applied through other different specific embodiments, and various details in the specification may also be modified or changed based on different viewpoints and applications without departing from the spirit of the present disclosure. It should be understood that the preferred embodiments are only for illustrating the present disclosure, rather than limiting the protection scope of the present disclosure. It is noted that the drawings are schematic and are not illustrated based on actual scales. For the purpose of clarity and convenience of the drawings, the relative dimensions and proportions of the components illustrated in the drawings are exaggerated or reduced in size, and any dimensions are illustrative but not limitative.

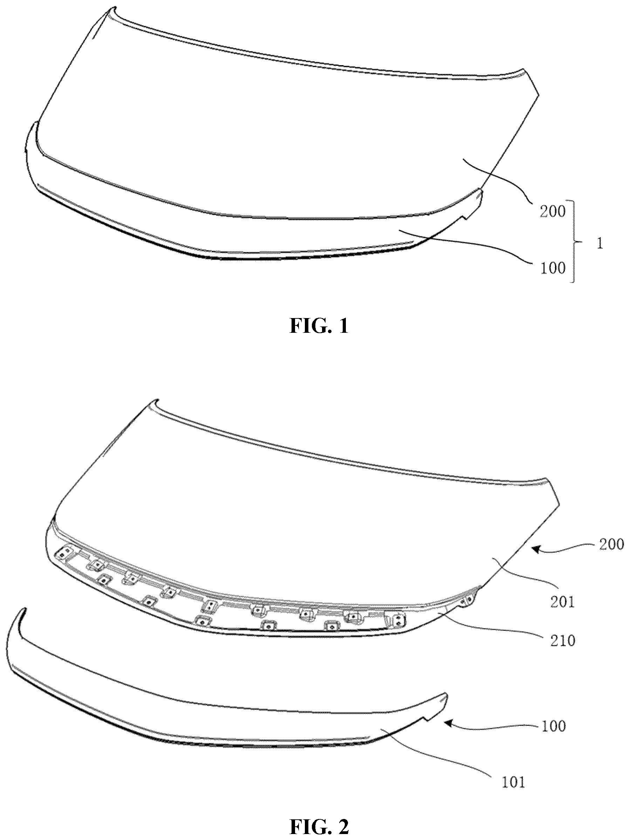

The directional terms and positional terms in the present disclosure may be explained with reference to the exemplary structures shown in FIGS. 1 to 7. Whereas the directional terms "front" and "rear" mentioned in the present disclosure mean that when the hood is assembled to the vehicle body, the direction approaching the front of the vehicle is "front", and correspondingly the direction approaching the rear of the vehicle is "rear". As well, the terms "first", "second", etc. are used to describe various elements without intending to qualify the positional, temporal or importance relationship of these elements, and such terms are used only to distinguish one element from another.

The present disclosure aims to improve the structure of a hood of a vehicle, by means of a two-piece structure with a hood body and a hood trim respectively, and the probability of repairing the entire of the hood is reduced when encountering a collision; meanwhile, the hood trim may be provided with graphics or text as required, and thus makes the styling of the hood more flexible and meet the requirements of vehicle design styles.

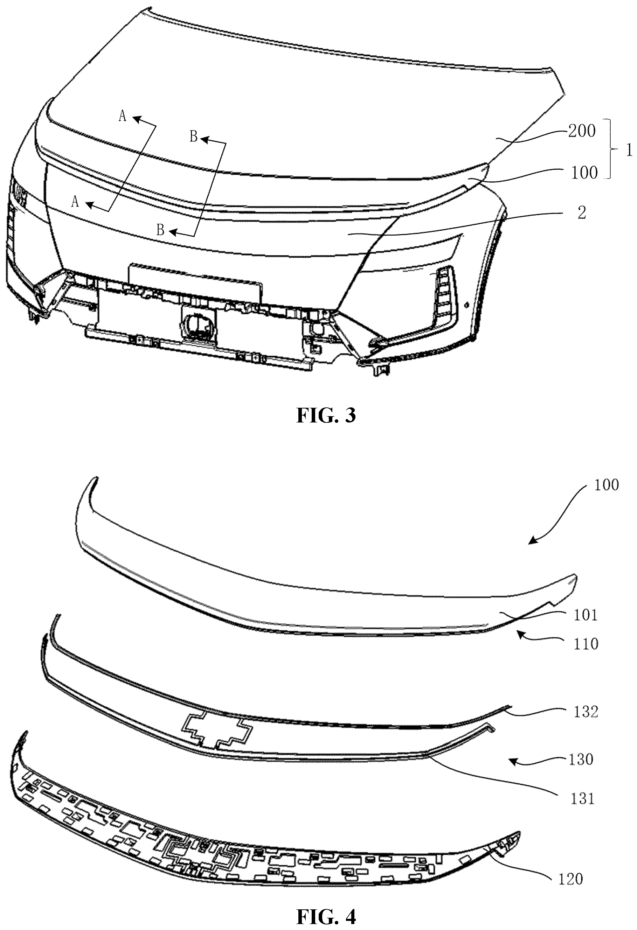

FIG. 1 illustrates a schematic structural view of a hood of the present disclosure, FIG. 2 illustrates an exploded structure of the hood, and FIG. 3 illustrates a reference layout of the hood applied to a front end of a vehicle. Referring to FIG. 1 to 3, the hood 1 is provided above an engine compartment of the vehicle, the hood 1 is rotatably opened to inspect and repair the inner of the engine compartment, and the front end of the hood 1 is in overlapping fit with an exterior trim member 2. The hood 1 comprises a hood trim 100 and a hood body 200, and one end of the hood body 200 is formed with a mounting base 210 for mounting the hood trim 100. The hood trim 100 and the hood body 200 are both sheet-like structures, and the hood trim 100 is at least partially overlapped on and fixed to the mounting base 210 to ensure the stability of the entire hood structure. It could be understood that the mounting base 210 of the hood body 200 may be provided at each end of the hood body 200, but considering the stylistic coordination and aesthetics of the hood 1, the hood trim 100 is generally provided at the front end of the hood body 200.

Generally, the surface area ratio of the appearance surface of the hood trim 100 to the appearance surface of the hood 1 is set to be not more than 1/2, and preferably, the surface area ratio is not more than 1/5. The appearance surface of the hood 1 comprises an appearance surface 101 of the hood trim 100 (means the top surface of the hood trim 100) and an appearance surface 201 of the hood body 200 (means the top surface of the hood body 200), and the appearance surface 101 of the hood trim 100 forms a streamlined surface having a synergistic style together with the appearance surface 201 of the hood body 200, in other words, the appearance surface 101 of the hood trim 100 forms a streamlined surface having an almost smooth transition together with the appearance surface 201 of the hood body 200. Those skilled in the art should know that the style of the appearance surface of the hood 1 will have a direct influence on the aerodynamic performance of the vehicle, such as on the coefficient of air resistance, while the streamlined appearance surface of the hood is the most basic requirement on the style of the hood, so in the present disclosure, the appearance surface 101 of the hood trim 100 should be set as a streamlined surface having a synergistic style together with the appearance surface 201 of the hood body 200. It will further be known by those skilled in the art that when a vehicle encounters a collision, especially a frontal collision, it is generally to damage the bumper firstly, followed by the hood. The hood is divided into two parts, so that during the collision, the hood trim of the hood close to the front end of the vehicle is firstly damaged, which reduces the probability of repairing of the entire of the hood. If only the hood trim needs to be repaired, it could be completed by only replacing the hood trim and reconnecting it with the hood body, which reduces the maintenance cost and the maintenance time. Meanwhile, it is possible to make a unique graphic or textual design on the hood trim, and thus makes the styling of the hood more flexible and meet the requirements of vehicle design styles.

According to some embodiments of the present disclosure, referring to FIG. 4 to 5, the hood trim 100 comprises an outer layer 110, an inner layer 120 and a middle layer 130. The connection ways of the above three layers may be that the outer layer 110 is connected to the inner layer 120, and then the middle layer 130 is clamped in the middle, or the middle layer 130 is connected to the outer layer 110 or the inner layer 120 in advance and then connected to the remaining layer. Considering that the outer layer 110 is an appearance surface, the inner layer 120 is preferably connected to the middle layer 130 in advance and then connected to the outer layer 110. The outer layer 110 forms the appearance surface of the hood trim 100, and graphics or texts may be designed on the outer layer 110 according to the design style, such as some unique color scheme, vehicle model identification, and brand identification, etc. The inner layer 120 is configured to be connected to the mounting base 210, and the mounting base 210 is correspondingly designed according to the mounting method.

Further, the middle layer 130 comprises a first sealing lip 131 and a second sealing lip 132, the first sealing lip 131 extends outwards between the outer layer 110 and the inner layer 120 at the front end of the hood trim 100, and the second sealing lip 132 extends outwards between the outer layer 110 and the inner layer 120 at the rear end of the hood trim 100. The front end of the first sealing lip 131 may abut against the exterior trim member 2 to cover the hood body 1, and the rear end of the second sealing lip 132 abuts against the hood body 200. It should be understood by those skilled in the art that if there is a gap between the hood 1 and the exterior trim member 2, the kinetic energy generated by the air at the gap and the relative speed of the vehicle when the vehicle is moving needs to be overcome by the vehicle, while the first sealing lip 131 abuts against the exterior trim member 2, which can guide the air to the hood, optimize the flow field of the vehicle, reduce the work done by the vehicle to overcome the air, and also protect against dust and water. The second sealing lip 132 abutting against the hood body 200 may also protect against dust and water, especially preventing rainwater from entering the engine compartment and damaging electronic components in the engine compartment. Further, the middle layer 130 is preferably made of rubber, so that the middle layer 130 can seal the engine compartment without damaging the peripheral member thereof by interference with the peripheral component thereof. The first sealing lip 131 of the middle layer 130 can also provide buffering and noise reduction when the hood 1 is closing. Preferably, the first sealing lip 131 is configured to interfere with the exterior trim member 2 in an interference range of 5-10 mm, and the second sealing lip 132 is configured to interfere with the hood body 200 in an interference range of 2-5 mm. The first sealing lip 131 and the second sealing lip 132 may be of an end-to-end annular structure, or a flow channel may be provided between the molds of the first sealing lip 131 and the second sealing lip 132 to form the first sealing lip 131 and the second sealing lip 132 connected in the middle and in a strip shape as shown in FIG. 4.

Further, in order to make the styling design of the outer layer 110 more flexible, the material of the outer layer 110 is preferably plastic, and correspondingly, the material of the inner layer 120 may also be plastic. In the manufacturing process of the hood 1, the prepared inner layer 120 may be pre-embedded in the mold cavity of the middle layer 130, the middle layer 130 is molded by secondary injection molding, and the middle layer 130 is connected to the inner layer 120, and then the outer layer 110 and the inner layer 120 are connected by penetration welding.

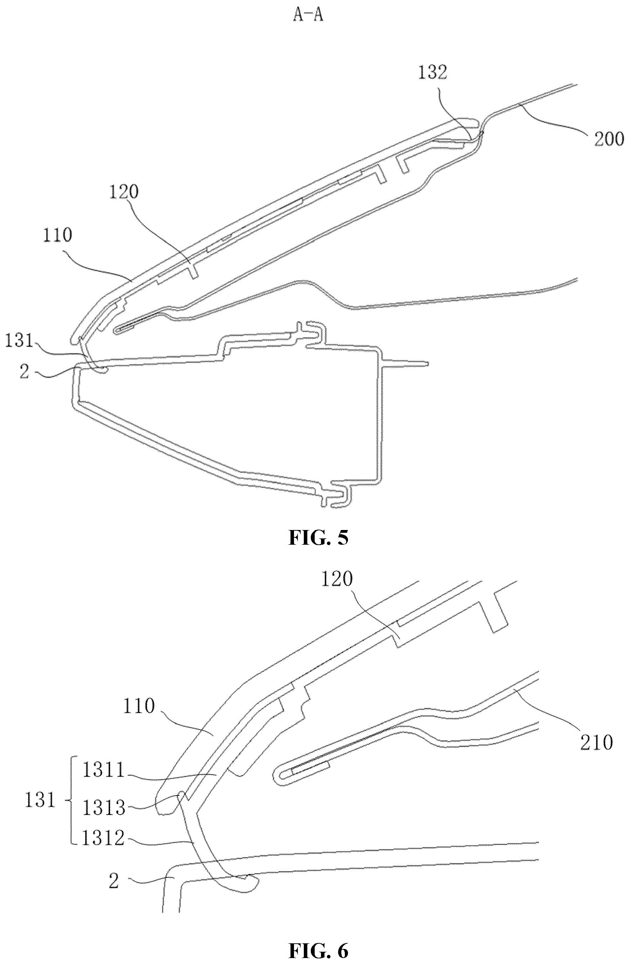

More specifically, in the structure of the first sealing lip 131 shown in FIG. 6, the first sealing lip 131 comprises a first section 1311 that fits against the inner layer 120, and a second section 1312 that extends and bends from the first section 1311 away from the outer layer 110 to cover the hood body 200. The first section 1311 and the second section 1312 are substantially L-shaped in the section shown in FIG. 6, so that when the first sealing lip 131 abuts against the exterior trim member 2, the second section 1312 is naturally bent by the resistance from the exterior trim member 2. Since the middle layer 130 is made of rubber, which has resilience, the second section 1312 exerts an elastic force to the exterior trim member 2, which can improve the sealing effect between the second section 1312 and the exterior trim member 2. In particular, the first sealing lip 131 further comprises a protrusion 1313 extending from a connection point, that connects the first section 1311 to the second section 1312, toward the outer layer 110 and abutting against the outer layer 110, which has a length ranging from 2-5 mm and can improve the anti-bending strength of the second section 1312 and the rebound effect of the second section 1312. In this way, when the hood 1 is closed for a long time and then opened, the protrusion 1313 can assist the second section 1312 to quickly rebound and restore elasticity.

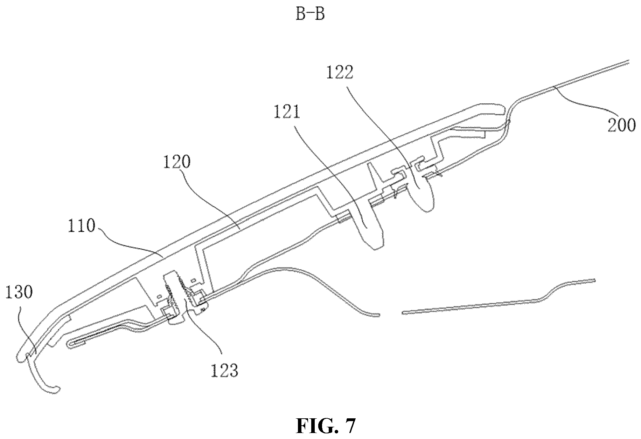

FIG. 7 is a cross-sectional view taken along the section B-B of FIG. 3, and as shown in FIG. 7, the hood trim 100 is provided with a positioning pin 121 to assist in limiting the position of the hood trim 100 when the hood trim 100 is mounted. The hood trim 100 may be pre-installed with a clip 122, and the hood trim 100 is snap-fitted to the mounting base 210 of the hood body 200 through the clip 122, or the hood trim 100 may be connected to the mounting base 210 of the hood body 200 through the bolt 123, or both snapping and bolt connections may be provided to ensure the stability of the connection between the hood trim 100 and the hood body 200. Those skilled in the art should know that the number and position of the positioning pins, the number and position of the clips, and the number and position of the bolts need to be determined according to the specific design of the hood.

In some embodiments, the present disclosure also provides a vehicle comprising the hood 1 as described above.

The technical content and technical features of the present disclosure have been disclosed above, however, it can be understood that under the inventive idea of the present disclosure, those skilled in the art can combine different embodiments or examples described in the present disclosure and the features of different embodiments or examples, but all fall within the protection scope of the present disclosure.

The description of the above embodiments is exemplary rather than limitative, and the protection scope of the present disclosure is defined by the appended claims.

## Claims

1. A hood (1), comprising:
a hood body (200), one end of which forms a mounting base (210); and,
a hood trim (100) at least partially overlapped on and fixed to the mounting base (210),
wherein the hood body (200) has an appearance surface (201) forms a streamlined surface having a synergistic style together with an appearance surface (101) of the hood trim (100).

2. The hood (1) according to claim 1, wherein the hood trim (100) comprises an outer layer (110), an inner layer (120) and a middle layer (130) connected together, the outer layer (110) forming the appearance surface (101) of the hood trim (100), the inner layer (120) being connected to the mounting base (210).

3. The hood (1) according to claim 2, wherein the middle layer (130) comprises a first sealing lip (131) and a second sealing lip (132) extending outwards between the outer layer (110) and the inner layer (120) respectively at two opposite ends of the hood trim (100), wherein the first sealing lip (131) is configured to cover the hood body (200), and the second sealing lip (132) is configured to abut against the hood body (200).

4. The hood (1) according to claim 2, wherein the middle layer (130) is made of rubber, and/or the outer layer (110) is made of plastic, and/or the inner layer (120) is made of plastic.

5. The hood (1) according to claim 2, wherein the middle layer (130) is connected to the inner layer (120) by being molded on the inner layer (120).

6. The hood (1) according to claim 2, wherein the outer layer (110) and the inner layer (120) are connected by penetration welding.

7. The hood (1) according to claim 3, wherein the first sealing lip (131) comprises a first section (1311) that fits against the inner layer (120), and a second section (1312) that extends and bends from the first section (1311) away from the outer layer (110) to cover the hood body (200).

8. The hood (1) according to claim 7, wherein the first sealing lip (131) further comprises a protrusion (1313) extending from a connection point, that connects the first section (1311) to the second section (1312), towards the outer layer (110) and abutting against the outer layer (110).

9. The hood (1) according to any one of claims 1 to 8, wherein the hood trim (100) is fixed to the hood body (200) by snapping and/or bolting.

10. A vehicle comprising the hood (1) according to any one of claims 1 to 9.
